Europäisches Patentamt

European Patent Office

Office européen des brevets

(19)

(11) **EP 0 717 517 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(51) Int Cl.⁷: **H04H 1/00**, H04L 1/20, H04L 25/49

(21) Anmeldenummer: **95119735.9**

(22) Anmeldetag: **14.12.1995**

(54) **Verfahren und Vorrichtung zur Bewertung eines RDS-Signals**

Method and system for evaluating a RDS signal

Méthode et dispositif pour l'évaluation d'un signal RDS

(84) Benannte Vertragsstaaten:
**FR GB IT**

(30) Priorität: **14.12.1994 DE 4444602**

(43) Veröffentlichungstag der Anmeldung:
**19.06.1996 Patentblatt 1996/25**

(73) Patentinhaber: **SGS-THOMSON MICROELECTRONICS GMBH
85630 Grasbrunn (DE)**

(72) Erfinder: **Roither, Gerhard
D-81827 München (DE)**

(74) Vertreter: **Klunker . Schmitt-Nilson . Hirsch
Winzererstrasse 106
80797 München (DE)**

(56) Entgegenhaltungen:
**EP-A- 0 627 138         EP-A- 0 627 832
US-A- 5 175 507**

**Beschreibung**

Die Erfindung betrifft ein Verfahren und eine Vorrichtung zur Bewertung der Qualität und/oder der Existenz eines biphasenmodulierten digitalen RDS-Signals in einem von einem Rundfunksender ausgesendeten und von einem RDS-tauglichen Rundfunkempfänger empfangenen Rundfunksignal, wobei empfängerseitig ein Bitratentaktsignal erzeugt wird, dessen Bitrate mit der des RDS-Signals übereinstimmt, die Bits sowohl des RDS-Signals als auch des Bitratentaktsignals je aus zwei Halbbits zusammengesetzt werden, von den beiden zu einem RDS-Bit gehörenden RDS-Halbbits eines eine positive Phase und das andere eine negative Phase aufweist.

Solch ein Verfahren und solch eine Vorrichtung sind aus dem Dokument US 5 175 507 bekannt, allerdings nicht zur Bewertung der Qualität und/oder der Existenz des RDS-Signals sondern zu dessen Demodulation.

Bei dem sogenannten RDS (Radio Data System) werden von Rundfunksendern, welche RDS-Information abstrahlen, die Senderidentifikation, alternative Frequenzen des Senders, Programmtyp usw. übertragen. Näheres ist in der Druckschrift "Specifications of the Radio Data System RDS for VHF/FM Sound Broadcasting", Tech. 3244-E, Technical Center of the European Broadcasting Union, Brussels, März 1984, beschrieben.

Bei der Übertragung von RDS-Information bedient man sich einer Trägerschwingung, der eine die RDS-Information enthaltende binäre Bitfolge aufmoduliert wird. Dabei kann man jedes Bit in zwei Halbbits unterteilen, wobei zwischen zwei benachbarten Halbbits desselben Bits eine Phasenumkehr stattfindet. Bei einem Wechsel des Logikwertes zwischen zwei benachbarten RDS-Bits tritt an der Stelle des Bitwechsels in der Trägerschwingung ein Phasensprung von 180° auf.

In Übereinstimmung mit dem in Deutschland gebräuchlichen ARI (Autofahrer-Rundfunk-Information) -System wird eine Trägerfrequenz von 57 kHz verwendet. Senderseitig wird nach der RDS-Modulation der 57 kHz-Träger unterdrückt. Daher wird empfangsseitig, beispielsweise in einem Autoradio, mit Hilfe eines Quarzoszillators und einer digitalen "Costas-Loop" der 57 kHz-Träger regeneriert. Mit Hilfe eines Frequenzteilers, der die Frequenz des regenerierten Trägers durch 48 teilt, wird empfängerseitig ein Bitratentaktsignal mit einer Bitrate von 1187,5 Hz erzeugt. Empfängerseitig wird eine Phasensynchronisation des Bitratentaktsignals mit dem empfängerseitig demodulierten, digitalen RDS-Signal vorgenommen.

Grundsätzlich ist man bei einem RDS-System bestrebt, die RDS-Daten empfängerseitig so schnell wie möglich sicher zu dekodieren, damit möglichst schnell die RDS-Information, wie Sendername, Alternativfrequenzen usw., verfügbar ist. Um sicherzustellen, daß korrekte RDS-Information übertragen wird, werden die RDS-Bits einem Qualitätsprüfungsverfahren unterzogen.

Bei einem korrekten RDS-Bit weist eines der beiden Halbbits eine positive Phase und das andere eine negative Phase auf. Dies gilt auch nach einem Phasensprung beim Bitwechsel zwischen zwei RDS-Bits, die einen unterschiedlichen Logikwert darstellen.

Diese Eigenschaft des RDS-Signals läßt sich für eine Qualitätsüberprüfung ausnutzen, indem die beiden Halbbits eines jeden RDS-Bits daraufhin untersucht werden, ob sie unterschiedliche Phasenvorzeichen aufweisen oder nicht. Wenn der empfängerseitig wiedergewonnene 57 kHz-Träger nicht in Phase mit dem RDS-Signal ist oder wenn das RDS-Signal eine Rauschstörung aufweist, können diese Erscheinungen erkannt werden und wird das betroffene RDS-Bit als "unsicher" markiert.

Diese Qualitätsüberwachung funktioniert aber nur dann korrekt, wenn die empfängerseitige Bit-PLL synchronisiert ist, d.h., wenn Phasensynchronisation zwischen dem empfängerseitig demodulierten, digitalen RDS-Signal und dem empfängerseitig erzeugten Bitratentaktsignal besteht. Denn die Bestimmung, welche Zeitperioden des RDS-Signals als dessen Halbbits interpretiert werden, hängt von dem empfängerseitigen Bitratentaktsignal ab. Daher funktioniert die Qualitätsüberwachung nur dann richtig, wenn immer nur Halbbits des RDS-Signals miteinander auf unterschiedliche Phasenvorzeichen überprüft werden, die zu demselben RDS-Bit gehören.

Solange die Bit-PLL nicht synchronisiert ist, also keine Phasensynchronisation zwischen dem RDS-Signal und dem Bitratentaktsignal besteht, kann die jeweilige Überprüfungszeitdauer zwei Halbbits erfassen, die zu unterschiedlichen RDS-Bits gehören. In diesem Fall ist die erhaltene Qualtitätsinformation nicht mehr sicher.

Der Erfindung liegt die Aufgabe zugrunde, ein Verfahren und eine Vorrichtung zur Bewertung der Qualität und/oder der Existenz eines biphasenmodulierten digitalen RDS-Signals verfügbar zu machen, bei denen immer, auch bei einem Synchronisationsmangel zwischen RDS-Signal und Bitratentaktsignal, eine sichere Aussage über die Qualität der überprüften RDS-Bits sichergestellt ist.

Die Lösung dieser Aufgabe besteht bei dem Verfahren der im Patentanspruch 1 angegebenen Art, wobei entscheidend ist, daß für die vorbestimmte Anzahl m eine ungerade ganze Zahl verwendet wird, die größer als 2 ist.

Weiterbildungen eines solchen Verfahrens und eine Vorrichtung zu dessen Durchführung sind in den Ansprüchen 2 bis 4 bzw. im Anspruch 5 angegeben.

Besonders bevorzugt ist eine Ausführungsfrom mit m = 3.

Dadurch, daß bei dem erfindungsgemäßen Verfahren bei jedem Qualitätsüberprüfungsvorgang mehr Halbbits miteinbezogen werden als zu einem RDS-Bit gehören, wird das richtige Ergebnis der Qualitätsüberprüfung unabhängig davon, ob Phasensynchronisation zwischen RDS-Signal und Bitratentaktsignal besteht oder nicht, erreicht.

Bei einem Qualitätsüberprüfungsverfahren, bei dem immer nur zwei benachbarte Halbbits in die Qualitätsüberprüfung einbezogen werden, wird auch für den Fall, daß gar kein RDS-Signal ausgesendet wird, Korrektheit der "RDS-Bits" gemeldet, obwohl gar keine RDS-Bits vorhanden sind. Dies deshalb, weil bei Nicht-Aussendung eines RDS-Signals auf der vermeintlichen RDS-Trägerfrequenz empfängerseitig Rauschen empfangen wird und Rauschen statistisch gleich viele Perioden positiver und negativer Phasenvorzeichen aufweist. Das herkömmliche Qualitätsüberprüfungsverfahren kommt daher zu dem Ergebnis, daß die Anzahl der positiven Phasenvorzeichen gleich der Anzahl der negativen Phasenvorzeichen ist, was als Empfang korrekter RDS-Bits gewertet wird.

Da bei dem erfindungsgemäßen Verfahren nicht ausgewertet wird, ob gleich viele positive und negative Phasenvorzeichen innerhalb des jeweiligen Überprüfungszeitraums auftreten, sondern, ob in dem jeweiligen Überprüfungszeitraum ein vorbestimmtes ungleiches Verhältnis zwischen positiven und negativen Phasenvorzeichen auftritt, wird Rauschen bei Anwendung des erfindungsgemäßen Verfahrens nicht fehlinterpretiert.

Das erfindungsgemäße Verfahren kann daher in einem RDS-Rundfunkempfänger zur Detektion herangezogen werden, ob eine Senderfrequenz, auf welche der RDS-Empfänger gerade abgestimmt ist, RDS-Information sendet oder nicht. Wird auf der empfangenen Senderfrequenz RDS-Information gesendet, kommt es zur Beurteilung mindestens des größten Teils der RDS-Bits als "gut". Ist der RDS-Empfänger auf die Sendefrequenz eines Rundfunksenders eingestellt, der zwar ARI-Information liefert, jedoch keine RDS-Information, wird zwar über einen 57 kHz-Träger Information gesendet, nämlich die ARI-Information, gibt es aber keine Biphasenmodulation, weil diese beim ARI-System nicht verwendet wird. Ist kein biphasenmoduliertes Signal vorhanden, tritt auch nicht das vorbestimmte Verhältnis zwischen positiven Phasenvorzeichen und negativen Phasenvorzeichen während des jeweiligen Qualitätsüberprüfungszeitraums auf. Beim Empfang eines ARI-Signals kommt es daher bei dem erfindungsgemäßen Verfahren zur Einstufung "qualitativ schlecht" während aller Qualitätsüberprüfungszeiträume. Dies kann als Bewertung dafür genutzt werden, daß kein RDS-Signal empfangen wird.

Ist der RDS-Empfänger gerade auf die Frequenz eines Rundfunksenders abgestimmt, der weder RDS- noch ARI-Information aussendet, wird für den 57 kHz-Träger empfängerseitig nur Rauschen empfangen. Dieses führt aber zu der Bewertung, daß innerhalb des jeweiligen Qualitätsüberprüfungszeitraums eine gleiche Anzahl von positiven und negativen Phasenvorzeichen auftritt und nicht das erfindungsgemäß vorbestimmte ungleiche Verhältnis zwischen positiven und negativen Phasenvorzeichen. Auch in diesem Fall wird daher sicher erkannt, daß keine RDS-Information übertragen wird.

Das erfindungsgemäße Verfahren erlaubt somit eine sichere Detektion, ob über die Senderfrequenz, auf welche der RDS-Rundfunkempfänger gerade abgestimmt ist, RDS-Information übertragen wird oder nicht.

Die Erfindung wird nun anhand von Ausführungsbeispielen unter Zuhilfenahme von Zeichnungen näher erläutert. In diesen Zeichnungen zeigen:

Fig. 1 den zeitlichen Verlauf eines RDS-Signals und Qualitätsauswertungen, die bei herkömmlicher bzw. bei erfindungsgemäßer Verarbeitung des RDS-Signals erhalten werden;

Fig. 2 die Darstellungen von Figur 1 mit zusätzlicher Information;

Fig. 3 ein Qualitätsbewertungsdiagramm einer bevorzugten Ausführungsform der Erfindung; und

Fig. 4 ein Diagramm einer erfindungsgemäßen Qualitätsbewertungsschaltung, die eine Bewertung gemäß Fig. 3 durchführt.

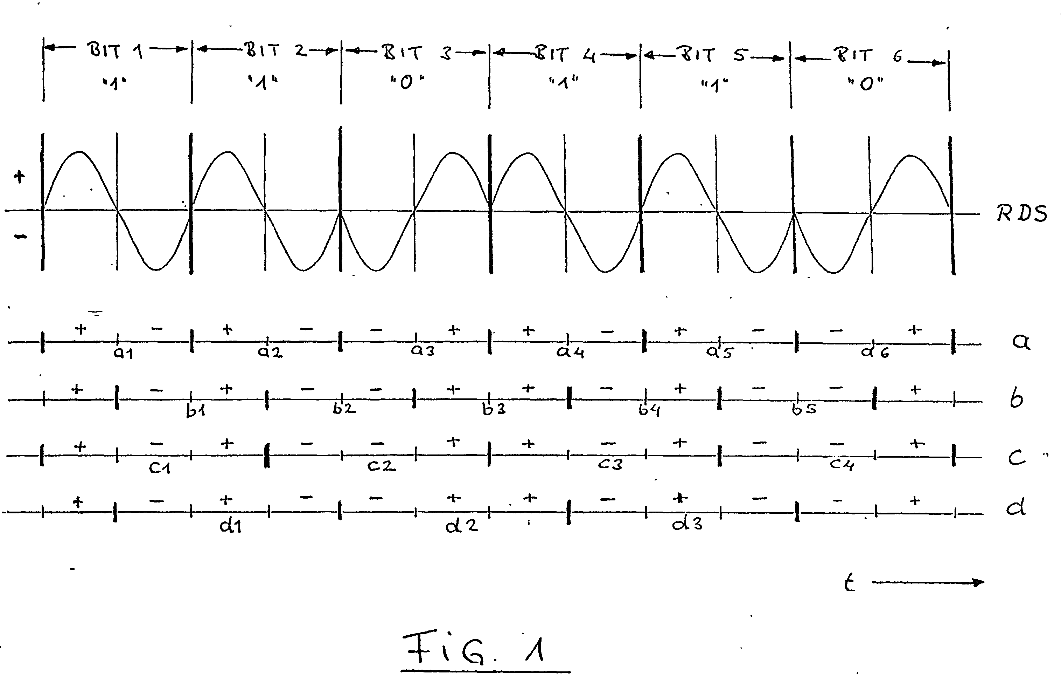

In Fig. 1 ist der zeitliche Verlauf eines RDS-Signals für sechs RDS-Bits dargestellt. In den darunterliegenden Zeilen a und b sind Qualitätsauswertungen entsprechend dem bekannten Qualitätsüberprüfungsverfahren und in den Zeilen c und d sind Bewertungen entsprechend dem erfindungsgemäßen Qualitätsüberprüfungsverfahren für den Fall dargestellt, daß zu einer Qualitätsüberwachungsperiode $m = 3$ benachbarte Halbbits herangezogen werden. Die Zeilen a und c zeigen Bewertungen des herkömmlichen bzw. des erfindungsgemäßen Verfahrens für den Fall, daß Phasensynchronisation zwischen dem RDS-Signal und dem Bitratentaktsignal besteht. Die Zeilen b und d zeigen Bewertungen des herkömmlichen bzw. des erfindungsgemäßen Verfahrens für den Fall, daß das RDS-Signal und das Bitratentaktsignal nicht phasensynchron sind.

In der Darstellung des RDS-Signals sind die Bitgrenzen mit dicken vertikalen Strichen markiert, während die Halbbitgrenzen innerhalb der einzelnen RDS-Bits mit dünnen vertikalen Strichen markiert sind. Die Signalanteile oberhalb der Abszisse sind mit einem + markiert, während die Signalanteile unterhalb der Abszisse mit einem - markiert sind. D.h., die Signalanteile oberhalb der Abszisse haben ein positives Phasenvorzeichen und die Signalanteile unterhalb der Absizsse haben ein negatives Phasenvorzeichen.

Wie bei der RDS-Biphasenmodulation vorgesehen, haben bei RDS-Bits, die einen Logikwert "1" darstellen, die ersten Halbbits positive und die zweiten Halbbits negative Phasenvorzeichen. Im Gegensatz dazu weisen RDS-Bits mit einem Logikwert "0" in ihren ersten Halbbits ein negatives Phasenvorzeichen und in ihren zweiten Halbbits ein positives Phasenvorzeichen auf. Der RDS-Signalverlauf in der dargestellten Zeichnung repräsentiert daher 6 RDS-Bits mit den Logikwerten 110110.

In den Zeilen a bis d der Zeichnung sind entlang der Abszissen oder Zeitachsen t vertikale Striche gezeichnet. Der Abstand zwischen zwei vertikalen Strichen entspricht je der Zeitdauer eines Halbbits des RDS-Signals bzw. des Bitratentaktsignals. Die zeitlichen Grenzen der einzelnen Qualitätsüberwachungszeiträume sind mit dicken vertikalen Strichen markiert. Das bedeutet für die Zeilen a und b, daß jeder Qualitätsüberwachungszeitraum solange wie zwei Halbbitperioden dauert. Die Zeilen c und d zeigen Qualitätsüberwachungszeiträume, die je eine Dauer von 3 Halbbitperioden haben.

Die Zeilen a und b kann man auch gleichzeitig als Darstellung des Bitratentaktsignals auffassen. Dabei markieren die dicken vertikalen Striche die Bitübergänge des Bitratentaktsignals, während die dünnen vertikalen Striche die Halbbitübergänge innerhalb eines jeden Bits des Bitratentaktsignals markieren. In Zeile a stimmen die Zeitlagen der dicken und der dünnen vertikalen Striche mit den Zeitlagen der dicken und der dünnen vertikalen Striche des RDS-Signals überein. RDS-Signal und Bitratentaktsignal sind somit in Phasensynchronisation. Die dicken und die dünnen vertikalen Striche in Zeile b sind gegenüber den dicken und den dünnen vertikalen Strichen der RDS-Signaldarstellung um 180° phasenverschoben. Zwischen dem RDS-Signal und dem Bitratentaktsignal der Zeile b besteht somit keine Phasensynchronisation.

In den Zeilen a bis d sind für jede Halbbitperiode die Phasenvorzeichen des RDS-Signals während dessen entsprechenden Halbbits eingetragen.

Die Qualitätsbewertung mittels des herkömmlichen Qualitätsüberwachungsverfahrens führt bei Phasensynchronisation zwischen dem RDS-Signal und dem Bitratentaktsignal, wie sie in Zeile a dargestellt ist, zu der Bewertung aller 6 RDS-Bits als korrekt oder sicher. In allen Qualitätsüberwachungszeiträumen a1 bis a6 tritt je ein positives und je ein negatives Phasenvorzeichen auf. Es werden also pro Qualitätsüberwachungszeitraum gleich viele positive und negative Phasenvorzeichen festgestellt. Die Bewertung führt also bei Phasensynchronisation zwischen RDS-Signal und Bitratenttaktsignal zu einem richtigen Ergebnis.

Bei einer Phasenverschiebung zwischen RDS-Signal und Bitratentaktsignal gemäß Zeile b kommt es zur richtigen Bewertung nur während der Qualitätsüberwachungsperioden b1 und b4. Während der Qualitätsüberwachungsperioden b2, b3 und b5 erfolgt eine falsche Bewertung, obwohl das RDS-Signal auch während dieser Qualitätsüberwachungsperioden korrekt ist. Trotz eines korrekten RDS-Signals wird während der 6 RDS-Bits dreimal die Qualitätsbewertung unsicher oder falsch gegeben.

Bei dem erfindunsgemäßen Qualitätsüberwachungsverfahren gemäß den Zeilen c und d besteht jede Qualitätsüberwachungsperiode aus drei benachbarten Halbbits, wie es der bevorzugten Ausführungsform der Erfindung entspricht. Bei Korrektheit des RDS-Signals müssen daher pro Qualitätsüberwachungsperiode unterschiedliche Phasenvorzeichen im Verhältnis 2:1 auftreten: entweder zweimal soviel positive Phasenvorzeichen wie negative Phasenvorzeichen oder zweimal soviel negative Phasenvorzeichen wie positive Phasenvorzeichen.

In Zeile c, die für die Annahme gilt, daß Phasensynchronisation zwischen dem RDS-Signal und dem Bitratentaktsignal besteht, wird das Verhältnis 2:1 für alle vier dargestellten Qualitätsüberwachungsperioden c1 bis c4 erreicht.

Betrachtet man nun den in Zeile d gezeigten Fall, daß keine Phasensynchronisation zwischen dem RDS-Signal und dem Bitratentaktsignal besteht, kommt es in allen drei dargestellten Qualitätsüberwachungsperioden d1 bis d3 ebenfalls zu dem Verhältnis 2:1 zwischen den unterschiedlichen Phasenvorzeichen, die während der jeweiligen Qualitätsüberwachungsperiode auftreten.

Während das herkömmliche Qualitätsüberwachungsverfahren gemäß den Zeilen a und b nicht mehr richtig funktioniert, wenn keine Phasensynchronisation zwischen RDS-Signal und Bitratentaktsignal besteht, ist das in den Zeilen c und d dargestellte erfindungsgemäße Qualitätsüberwachungsverfahren unempfindlich gegenüber der Phasenlage zwischen RDS-Signal und Bitratentaktsignal.

Würde die Sendefrequenz eines Senders empfangen, der kein RDS-Signal ausstrahlt und daher keinen 57 kHz-Träger erzeugt, so daß empfängerseitig Rauschen empfangen würde, würden bei den herkömmlichen Verfahren entsprechend den Zeilen a und b statistisch gesehen pro Qualitätsüberwachungsperiode gleich viele positive wie negative Phasenvorzeichen auftreten. Solches Rauschen würde daher mit den herkömmlichen Qualitätsüberwachungsverfahren als korrektes RDS-Signal eingestuft.

Rauschen würde bei dem erfindungsgemäßen Qualitätsüberwachungsverfahren gemäß den Zeilen c und d statistisch gesehen pro Qualitätsüberwachungsperiode ebenfalls zu gleich viel positiven wie negativen Phasenvorzeichen führen. Dies würde zum Bewertungsverhältnis 1:1 von positiven und negativen Phasenvorzeichen führen, läge also außerhalb des vorbestimmten Bewertungsverhältnisses 2:1. Mit dem erfindunsgemäßen Verfahren würde daher das Rauschen als qualitativ schlecht eingestuft.

Das erfindungsgemäße Verfahren kann auch mit Qualitätsüberwachungsperioden durchgeführt werden, die mehr als drei Halbbitperioden dauern. Um Rauschen sicher als qualitativ schlecht einstufen zu können, muß jede Qualitätsüberwachungsperiode eine Dauer von einer ungeraden Anzahl von benachbarten Halbbits haben. Das erfindunsgemäße Verfahren wäre daher auch mit 5,7,9,..... nebeneinanderliegenden Halbbits pro Qualitätsüberwachungsperiode durchführbar. In diesen Fällen lägen die vorbestimmten Bewertungsverhältnisse bei 3:2 bzw. 4:3 zw. 5:4.

Ganz allgemein gilt für das erfindungsgemäße Verfahren, daß für eine Qualitätsüberwachungsperiode mit m nebeneinanderliegenden Halbbits das überwachte RDS-Signal als korrekt bewertet wird, wenn sich für die Anzahl von positiven und negativen Phasenvorzeichen pro Überwachungsperiode ein Verhältnis von

$$(0,5 \cdot m + 0,5) \; (0,5 \cdot m - 0,5)$$

oder umgekehrt ergibt.

Das beste Ergebnis erhält man allerdings mit drei nebeneinanderliegenden Halbbits pro Qualitätsüberwachungsperiode. Denn je höher die Anzahl nebeneinanderliegender Halbbits pro Qualitätsüberwachungsperiode ist, desto dichter nähert man sich dem Verhältnis 1:1 zwischen positiven und negativen Phasenvorzeichen, die pro Qualitätsüberwachungsperiode auftreten müssen, um zu einer Einstufung als qualitativ gut zu kommen. Und je näher man sich diesem Verhältnis 1:1 nähert, umso schlechter kann vermieden werden, daß Rauschen als ein qualitativ gutes RDS-Signal eingestuft wird.

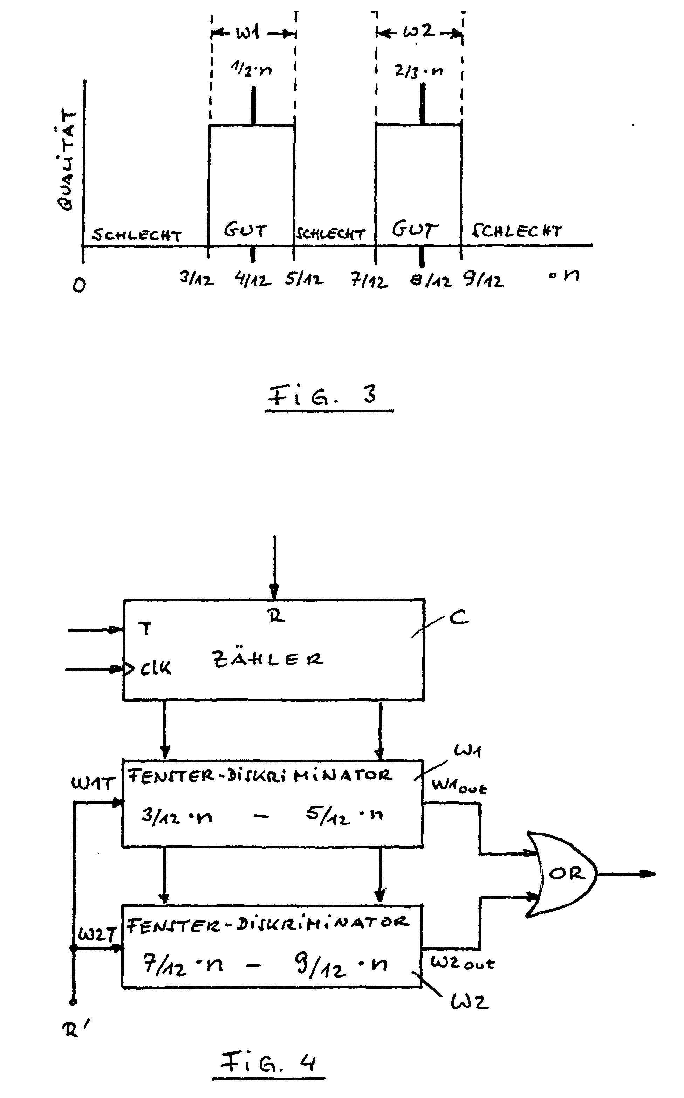

Bevor das Qualitätsbewertungsdiagramm der Fig. 3 und die Qualitätsbewertungsschaltungsanordnung der Fig. 4 erläutert werden, seien noch folgende Erklärungen gegeben.

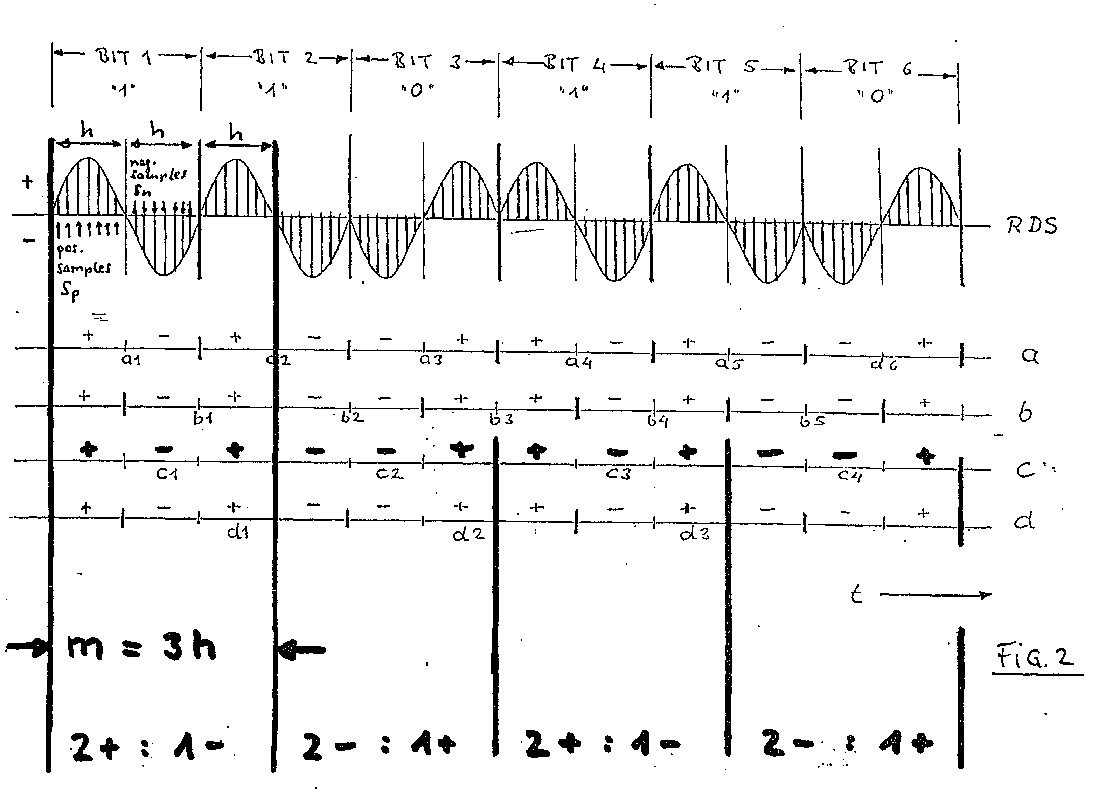

Fig. 2 zeigt den Verlauf des RDS-Signals der Fig. 1, und zwar ebenfalls für den Fall, daß eine Überwachungsperiode mit drei nebeneinanderliegenden Halbbits verwendet wird. Zusätzlich zu Fig. 1 zeigt Fig. 2 noch Abtastwerte des RDS-Signals mit positiven und negativen Phasenwerten. Dies trägt der bevorzugten Praxis Rechnung, wonach das RDS-Signal (ein Phasenlagensignal) periodisch abgetastet wird. Die Qualitätsbewertung des RDS-Signals wird auf der Grundlage dieser Phasenabtastwerte durchgeführt.

Zunächst seien die folgenden Definitionen gegeben:

m = Anzahl der benachbarten Halbbits pro Qualitätsbewertungsperiode
h = eine Halbbitperiode
s = Anzahl Abtastwerte pro Halbbit h
$s_p$ = positiv gerichtete Phasenabtastwerte
$s_n$ = negativ gerichtete Phasenabtastwerte
n = Anzahl Phasenabtastwerte pro Qualitätsüberwachungsperiode
r = Bewertungsverhältnis zwischen positiven und negativen Phasenabtastwerten

Unter Anwendung dieser Definitionen seien nun vier Beispiele mit Qualitätsüberwachungsperioden unterschiedlich vieler benachbarter Halbbits betrachtet.

Beispiel 1: für

m = 3h
s = 24
n = 72

ergibt sich ein Bewertungsverhältnis für ein gutes RDS-Signal von

$s_p : s_n = 2:1$
oder $s_n : s_p = 2:1$

Beispiel 2: für

m = 5h
s = 24
n = 120 ergibt sich ein Bewertungsverhältnis für ein gutes RDS-Signal von
$s_p : s_n = 3:2$
oder $s_n : s_p = 3:2$

Beispiel 3: für

m = 7h
s = 24
n = 168 ergibt sich ein Bewertungsverhältnis für ein gutes RDS-Signal von

$s_p : s_n = 4:3$
oder $s_n : s_p = 4:3$

Beispiel 4: für

m = 9h
s = 24
n = 216 ergibt sich ein Bewertungsverhältnis für ein gutes RDS-Signal von

$s_p : s_n = 5:4$
oder $s_n : s_p = 5:4$

Wie bereits erwähnt und aus den vorausgehend dargestellten vier Beispielen ersichtlich, ergibt sich das schärfste und sicherste Bewertungskriterium für den Fall, daß pro Qualitätsüberwachungsperiode m = 3 Halbbits verwendet werden, entsprechend Beispiel 1.

Eine Umsetzung des erfindungsgemäßen Verfahrens in die Praxis erfordert eine Bewertungsschaltung, die zwischen korrekten oder guten RDS-Signalen und inkorrekten oder schlechten RDS-Signalen unterscheiden kann oder, genauer gesagt, zwischen korrekten und inkorrekten Bewertungsverhältnissen. Im Hinblick auf die relativ große Anzahl von Abtastwerten pro Qualitätsüberwachungsperiode werden bei einer bevorzugten Ausführungsform Abweichungen von dem exakten Wert des korrekten Bewertungsverhältnisses bis zu einem vorbestimmten Ausmaß toleriert.

Ein Bewertungsdiagramm eines Ausführungsbeispiels, das solche Abweichungen von den exakten Bewertungsverhältnissen innerhalb eines bestimmten Toleranzbereichs zuläßt, ist in Fig. 3 gezeigt. Dieses Bewertungsdiagramm zeigt Marken bei 1/3*n und bei 2/3*n, also Marken bei den exakten Bewertungsverhältnissen, sowie ein erstes Diskriminatorfenster w1 und ein zweites Diskriminatorfenster w2. Für das Diagramm der Fig. 3 ist angenommen, daß nur positive Phasenabtastwerte $s_p$ oder nur negative Phasenabtastwerte $s_n$ bewertet werden. Zieht man für die Qualitätsbewertung nur Abtastwerte mit derselben Phasenlage heran, beispielsweise nur die Abtastwerte mit positiven Phasenwerten, ist das RDS-Signal korrekt für

$$s_p : s_n = 2 : 1$$
$$\text{oder für } s_p : s_n = 1 : 2.$$

Das bedeutet, daß das RDS-Signal korrekt ist, wenn von allen n (positiven und negativen) Abtastwerten s einer Qualitätsüberwachungsperiode m entweder 1/3 oder 2/3 positive Phasenabtastwerte $s_p$ sind, die Anzahl der positiven Phasenabtastwerte $s_p$ also 1/3*n oder 2/3*n ist.

Das RDS-Signal ist beispielsweise inkorrekt oder schlecht, wenn von allen n (positiven und negativen) Abtastwerten s einer Qualitätsüberwachungsperiode m 1/2*n, also die Hälfte, positive Abtastwerte sind (dies dann, wenn kein RDS-Signal vorhanden ist oder nur Rauschen) oder 0 oder n Abtastwerte positive Phasenabtastwerte sind (wenn ein reines ARI-Signal empfangen wird).

Bei dem in Fig. 3 gezeigten Bewertungsdiagramm reicht das erste Diskriminatorfenster w1 von 3/12*n bis 5/12*n, während das zweite Diskriminatorfenster w2 von 7/12*n bis 9/12*n reicht. Folglich wird ein RDS-Signal als gut oder korrekt bewertet, wenn das Verhältnis

$$s_p : n$$

im Bereich von 3/12 bis 5/12 oder im Bereich von 7/12 bis 9/12 liegt.

Und das RDS-Signal wird als inkorrekt oder schlecht bewertet, wenn dieses Verhältnis außerhalb dieser beiden Bereiche liegt.

Eine Qualitätsbewertungsschaltung, mit welcher man die Qualitätsbewertungsmethode gemäß Fig. 3 ausführen kann, ist in Fig. 4 in Form eines Blockschaltbildes gezeigt.

Diese Schaltung besitzt einen Zähler C und zwei Fenster-Diskriminatoren W1 und W2 sowie eine ODER-Schaltung OR in der in Fig. 4 gezeigten Verschaltung.

Der Zähler C besitzt drei Eingänge:

einen Zählfreigabeeingang T, dem das RDS-Phasensignal zugeführt wird, und der ein Zählen des Zählers C nur zuläßt, wenn sich das RDS-Signal in positiver Phasenlage befindet;

einen Takteingang clk, der ein Impulssignal mit einer Pulsfrequenz aufweist, die der Abtastrate entspricht, mittels welcher das RDS-Signal abgetastet wird; und

einen Rücksetzeingang R, der ein Rücksetzsignal am Ende einer jeden Qualitätsüberwachungsperiode m erhält.

Der Zähler C weist einen Zählwertausgang $COUNT_{out}$ auf, über den entweder permanent der jeweilige Zählwert oder alternativ nur der Endzählwert, den der Zähler C unmittelbar vor dem Rücksetzen über den Rücksetz-Eingang R aufweist, an die beiden Fenster-Diskriminatoren W1 und W2 gegeben wird, und zwar über deren Eingänge $W1_{in}$ bzw. $W2_{in}$. Diese Eingänge sowie der Zählerausgang $COUNT_{out}$ sind durch zwei Pfeile dargestellt, was zum Ausdruck bringen soll, daß jede der einzelnen Zählstufen des Zählers C mit einer je zugehörigen Stufe des Fenster-Diskriminators W1 bzw. des Fenster-Diskriminators W2 verbunden ist.

Bei der in Fig. 4 dargestellten Ausführungsform ist angenommen, daß den Fenster-Diskriminatoren W1 und W2 dauernd die Zählwerte des Zählers C überstellt werden. Für diesen Fall wird den Fenster-Diskriminatoren W1 und W2 über Triggereingänge W1T bzw. W2T, die mit einem gemeinsamen Anschluß R' verbunden sind, unmittelbar vor Rücksetzung des Zählers C ein Triggersignal zugeführt, welches in den beiden Fenster-Diskriminatoren W1 und W2 je einen Vergleich auslöst, durch welchen ermittelt wird, ob der zu diesem Zeitpunkt vorhandene Endzählwert des Zählers C im Fenster des Fenster-Diskriminators W1 oder im Fenster des Fenster-Diskriminators W2 liegt oder nicht. Liegt der Endzählwert im Fensterbereich eines dieser beiden Fenster-Diskriminatoren W1 und W2, wird über einen Diskriminatorausgang $W1_{out}$ bzw. $W2_{out}$ ein Signal an einen je zugehörigen von zwei Eingängen der ODER-Schaltung OR gegeben, was zur Abgabe eines Qualitätssignals am Ausgang von OR führt. Das Ausgangssignal von OR hat je nach dem, ob der Endzählwert des Zählers C innerhalb des Fensters eines der beiden Fensterdiskriminatoren W1 und W2 liegt oder nicht, einen ersten oder einen zweiten Binärwert, so daß der ODER-Schaltung OR nachfolgende Schaltungen signalisiert bekommen, ob das RDS-Signal in der jeweils ausgewerteten Qualitätsüberwachungsperiode ein korrektes RDS-Signal ist oder nicht.

**Patentansprüche**

**1.** Verfahren zur Bewertung der Qualität und/oder der Existenz eines biphasenmodulierten digitalen RDS-Signals in einem von einem Rundfunksender ausgesendeten und von einem RDS-tauglichen Rundfunk-Empfänger empfangenen Rundfunksignal, wobei

empfängerseitig ein Bitratentaktsignal erzeugt wird, dessen Bitrate mit der des RDS-Signals übereinstimmt,

die Bits sowohl des RDS-Signals als auch des Bitratentaktsignals je aus zwei Halbbits zusammengesetzt werden,

von den beiden zu einem RDS-Bit gehörenden RDS-Halbbits eines eine positive Phase und das andere eine negative Phase aufweist,

und für die Qualitäts- oder Existenzbewertung die Anzahl der positiven Phasenvorzeichen und die Anzahl der negativen Phasenvorzeichen, welche das RDS-Signal während der Halbbitperioden einer vorbestimmten Anzahl m nebeneinanderliegender Halbbits des Bitratentaktsignals jeweils aufweist, ermittelt werden und das RDS-Signal in Abhängigkeit davon, ob das Verhältnis zwischen der ermittelten Anzahl positiver Phasenvorzeichen und der ermittelten Anzahl negativer Phasenvorzeichen einem vorbestimmten Zahlenverhältnis entspricht oder nicht, als qualitativ gut bzw. als qualitativ schlecht eingestuft wird,

wobei für m eine ungerade ganze Zahl verwendet wird, die größer als 2 ist.

2. Verfahren nach Anspruch 1, bei welchem m = 3 gewählt wird.

3. Verfahren nach Anspruch 1 oder 2, bei welchem das RDS-Signal n-mal pro vorbestimmter Anzahl m benachbarter Halbbits abgetastet wird, die Anzahl entweder der positive Phasenlage aufweisenden Abtastwerte $s_p$ oder die Anzahl der negative Phasenlage aufweisenden Abtastwerte $s_n$, die während der vorbestimmten Anzahl von m benachbarten Halbbits auftreten, gezählt wird und das RDS-Signal als korrekt eingestuft wird, wenn die Anzahl der positive bzw. negative Phasenlage aufweisenden Abtastwerte, die während der vorbestimten Anzahl von m benachbarten Halbbits gezählt werden, n*(1/2*m + 1/2)/m oder n*(1/2*m - 1/2)/m ist.

4. Verfahren nach Anspruch 3, bei welchem das RDS-Signal als korrekt eingestuft wird, wenn die Anzahl der positive bzw. negative Phasenlage aufweisenden Abtastwerte, die während der vorbestimten Anzahl von m benachbarten Halbbits gezählt werden, innerhalb eines von zwei Diskriminator-Fenstern (w1, w2) liegt, von denen eines den Wert n*(1/2*m + 1/2)/m und das andere den Wert n*(1/2*m - 1/2)/m enthält.

5. Vorrichtung zur Ausführung des Verfahrens nach Anspruch 4, mit: einem Zähler (C), einer Fenster-Diskriminatoreinrichtung (W1, W2) und einer Bewertungseinrichtung (OR);
wobei:

der Zähler (C) zu Beginn einer vorbestimmten Anzahl von m benachbarten Halbbits zum Zählen entweder positive Phasenlage aufweisender Abtastwerte oder negative Phasenlage aufweisender Abtastwerte freigegeben und am Ende der vorbestimmten Anzahl von m benachbarten Halbbits rückgesetzt wird;

die Fenster-Diskriminatoreinrichtung (W1, W2) dazu ausgelegt ist, vom Zähler (C) einen Endzählwert positive bzw. negative Phasenlage aufweisender Abtastwerte, der am Ende der vorbestimmten Anzahl von m benachbarten Halbbits auftritt, zu empfangen und an einem Ausgang ein Diskriminatorsignal einer ersten Art abzugeben, wenn der Endzählwert innerhalb eines von zwei Diskriminator-Fenstern (w1, w2) liegt, von denen eines den Wert n* (1/2*m + 1/2)/m und das andere den Wert n* (1/2*m - 1/2)/m enthält, und ein Diskriminatorsignal zweiter Art abzugeben, wenn der Endzählwert außerhalb der beiden Diskriminator-Fenster liegt; und

die Bewertungseinrichtung (OR) dazu ausgelegt ist, die Signale von der Fenster-Diskriminatoreinrichtung (W1, W2) zu empfangen und an einem Ausgang ein Signal abzugeben, das ein korrektes RDS-Signal signalisiert, wenn die Fenster-Diskriminatoreinrichtung (W1, W2) ein Signal der ersten Art abgibt, und ein Signal abzugeben, welches das Auftreten eines inkorrekten RDS-Signals oder das Fehlen eines RDS-Signals anzeigt, wenn die Fenster-Diskriminatoreinrichtung (W1, W2) nur Ausgangssignale der zweiten Art abgibt.

**Claims**

1. A method of assessing the quality and/or existence of a biphase-modulated digital RDS signal in a radio signal broadcast by a radio transmitter and received by a radio receiver equipped for RDS, wherein a bit rate clock signal is produced on the receiver side whose bit rate is identical to that of the RDS signal, the bits both of the RDS signal and of the bit rate clock signal are each composed of two half bits, of the two RDS half bits belonging to an RDS bit, one has a positive phase and the other one has a negative phase,

and wherein, for quality or existence assessment, the number of positive phase signs and the number of negative phase signs are determined which are each contained in the RDS signal during the half bit periods of a predetermined number of m adjacent half bits of the bit rate clock signal, and the RDS signal, depending on whether or not the ratio between the number of positive phase signs ascertained and the number of negative phase signs ascertained corresponds to a predetermined numerical ratio, is rated as being a signal of good quality or as a signal of poor quality, respectively, and wherein an odd integer is used for m, which is greater than 2.

**2.** A method according to claim 1, wherein the value selected for m is 3.

**3.** A method according to claim 1 or 2, wherein the RDS signal is sampled n times per the predetermined number of m adjacent half bits, the number of either positive phase position samples $s_p$ or of negative phase position samples $s_n$ occurring during the predetermined number of m adjacent half bits is counted and the RDS signal is assessed be correct if the number of positive or negative, respectively, phase position samples counted during the predetermined number of m adjacent half bits is $n*(1/2*m + 1/2)/m$ or $n*(1/2*m - 1/2)/m$.

**4.** A method according to claim 3, wherein the RDS signal is rated to be correct if the number of positive or negative, respectively, phase position samples counted during the predetermined number of m adjacent half bits is within one of two discriminating windows (w1, w2), one having the value $n*(1/2*m + 1/2)/m$ and the other one having the value $n*(1/2*m -1/2)/m$.

**5.** A device for carrying out the method according to claim 4, comprising: a counter (C), a window discriminator means (W1, W2) and an evaluating means (OR); wherein:

the counter (C), at the beginning of a predetermined number of m adjacent half bits, is enabled to count either positive phase position samples or negative phase position samples and is reset at the end of the predetermined number of m adjacent half bits; the window discriminator means (W1, W2) is adapted to receive from the counter (C) a final count of the positive or negative, respectively, phase position samples occurring at the end of the predetermined number of m adjacent half bits and to issue at an output a discriminating signal of a first nature if the final count is within one of two discriminating windows (w1, w2), one thereof having the value $n*(1/2*m + 1/2)/m$ and the other having the value $n*(1/2*m - 1/2)/m$, and to output a discriminating signal of a second nature if the final count is outside both said discriminating windows; and

the evaluating means (OR) is adapted to receive the signals from the window discriminator means (W1, W2) and to issue at an output a signal indicating a correct RDS signal if the window discriminator means (W1, W2) outputs a signal of the first nature, and a signal indicating the occurrence of an incorrect RDS signal or the lack of an RDS signal if the window discriminator means (W1, W2) outputs signals of the second nature only.

## Revendications

**1.** Procédé d'évaluation de la qualité et/ou de l'existence d'un signal RDS numérique modulé diphasé dans un signal radio émis par un émetteur radio et reçu par un récepteur radio valable pour le système RDS, dans lequel côté récepteur il est produit un signal de rythme de débit binaire dont le débit binaire coïncide avec celui du signal RDS, les bits du signal RDS comme du signal de rythme de débit binaire sont composés chacun de deux demi-bits, des deux demi-bits RDS faisant partie d'un bit RDS, l'un présente une phase positive et l'autre une phase négative, et pour l'évaluation de la qualité ou de l'existence, on détermine le nombre de signes positifs de phase et le nombre de signes négatifs de phase que présente le signal RDS pendant les périodes de demi-bit d'un nombre m prédéterminé de demi-bits juxtaposés du signal de rythme de débit binaire, et le signal RDS est classé comme qualitativement bon ou qualitativement mauvais suivant que le rapport entre le nombre déterminé de signes positifs de phase et le nombre déterminé de signes négatifs de phase correspond ou non à un rapport chiffré prédéterminé, pour m étant utilisé un nombre entier impair qui est supérieur à 2.

**2.** Procédé selon la revendication 1, dans lequel on choisit m égal à 3.

**3.** Procédé selon la revendication 1 ou 2, dans lequel le signal RDS est analysé n fois par nombre m prédéterminé de demi-bits voisins, on compte le nombre soit de valeurs d'analyse $S_p$ présentant la position de phase positive, soit le nombre de valeurs d'analyse $S_n$ présentant la position de phase négative, qui se présentent pendant le nombre prédéterminé de m demi-bits voisins, et on classe le signal RDS comme étant correct si le nombre de valeurs d'analyse présentant la position positive ou la position négative de phase, qui sont comptées pendant le nombre prédéterminé de m demi-bits voisins, est égal à $n*(1/2*m + 1/2)/m$ ou à $n*(1/2*m - 1/2)/m$.

**4.** Procédé selon la revendication 3 dans lequel le signal RDS est classé comme étant correct si le nombre de valeurs d'analyse présentant la position positive ou la position négative de phase, qui sont comptées pendant le nombre prédéterminé de m demi-bits voisins, se situe à l'intérieur de l'une de deux fenêtres de discrimination (w1, w2), dont une contient la valeur n*(1/2*m + 1/2)/m et l'autre la valeur n*(1/2*m - 1/2)/m.

**5.** Dispositif pour la mise en oeuvre du procédé selon la revendication 4, comportant : un compteur (C), un dispositif discriminateur à fenêtres (W1, W2) et un dispositif d'évaluation (OR) ;
dans lequel :

le compteur (C) est autorisé, au début d'un nombre prédéterminé m de demi-bits voisins, à compter soit des valeurs d'analyse présentant une position de phase positive, soit des valeurs d'analyse présentant une position de phase négative, et est remis à zéro à la fin du nombre prédéterminé de m demi-bits voisins ;

le dispositif discriminateur à fenêtres (W1, W2) est dimensionné pour recevoir du compteur (C) une valeur de comptage finale de valeurs d'analyse présentant une position de phase positive ou négative, qui se produit à la fin du nombre prédéterminé de m demi-bits voisins, et à délivrer à une sortie un signal de discrimination d'un premier type, lorsque la valeur de comptage finale se situe à l'intérieur de l'une de deux fenêtres de discrimination (w1, w2) dont une contient la valeur n*(1/2*m + 1/2)/m et l'autre la valeur n*(1/2*m - 1/2)/m, et pour délivrer un signal de discrimination de deuxième type lorsque la valeur de comptage finale se situe à l'extérieur de deux fenêtres de discrimination ; et

le dispositif d'évaluation (OR) est dimensionné pour recevoir les signaux du dispositif discriminateur à fenêtres (W1, W2) et pour délivrer à une sortie un signal qui signale un signal RDS correct lorsque le dispositif discriminateur à fenêtres (W1, W2) délivre un signal du premier type et pour délivrer un signal qui indique l'apparition d'un signal RDS incorrect ou l'absence d'un signal RDS, lorsque le dispositif discriminateur à fenêtres (W1, W2) ne délivre que des signaux de sortie du deuxième type.

FIG. 1

EP 0 717 517 B1

FIG. 2

FiG. 3

FiG. 4